# EUROPÄISCHE PATENTSCHRIFT

(11) **EP 2 308 698 B1**
(45) Veröffentlichungstag und Bekanntmachung des Hinweises auf die Patenterteilung: **10.05.2017**
(21) Anmeldenummer: 10169023.8
(22) Anmeldetag: 09.07.2010
(51) Int. Cl.: B60C 23/00, F16J 15/32

(54) **Reifendruck-Regelanlage mit Drehdurchführung und Ventilbaugruppe**
Tyre pressure regulator with rotary feed-through and valve assembly
Installation de réglage de la pression des pneus avec passage rotatif et agencement de soupapes

(30) Priorität: 08.10.2009 DE 102009048750
(43) Veröffentlichungstag der Anmeldung: 13.04.2011
(73) Patentinhaber: CLAAS Industrietechnik GmbH, 33106 Paderborn (DE)
(72) Erfinder: Fredriksen, Nils, 33428, Harsewinkel (DE); Brinkmann, Christian, 48336 Sassenberg (DE)
(74) Vertreter: Budach, Steffen

(56) Entgegenhaltungen:
- EP-A2- 0 308 256
- EP-A2- 0 365 953
- WO-A2-2008/142679
- DE-A1- 3 247 371
- DE-A1- 3 833 873
- DE-A1-102007 054 887
- DE-B3- 10 360 764
- US-A- 4 744 399
- US-A- 4 782 879
- US-A1- 2002 170 597
- US-A1- 2008 023 918

## Beschreibung

Die vorliegende Erfindung betrifft eine Reifendruck-Regelanlage für ein Fahrzeug, insbesondere ein landwirtschaftliches Fahrzeug, sowie radseitige Ventilbaugruppen, die in einer solchen Reifendruck-Regelanlage verwendbar sind.

Reifendruck-Regelanlagen werden in Nutzfahrzeugen verwendet, um den Reifendruck an die Art des befahrenen Untergrundes wie etwa eine nachgiebige Ackerfläche oder die feste Fahrbahn einer Straße anpassen zu können. Indem der Reifendruck angepasst wird, wenn sich der Beladungszustand des Fahrzeugs oder die Art des befahrenen Untergrundes ändert, kann die Zugkrafteffizienz gesteigert, Kraftstoff eingespart und eine unnötige Verdichtung von befahrener Ackerfläche vermieden werden.

Je nach Art der Druckluftzuführung zum Reifen kann zwischen externen und internen Reifendruck-Regelanlage unterschieden werden. Bei den externen Anlagen wird die Druckluft im Reifen über eine an der karosserieabgewandten Seite des Rades verlaufende Leitung zugeführt. Eine solche Leitung ist im Falle eines Defekts gut zugänglich und leicht zu warten, ist aber auch stark gefährdet, beim Einsatz beschädigt zu werden. Bei einer internen Reifendruckanlage wird die Druckluft im Reifen über einen in die Achsstruktur des Rades integrierten Leitungsstrang zugeführt. Ein solcher Leitungsstrang ist zwar gut vor äußerer Beschädigung geschützt, doch im Falle eines Defekts ist er schwer zugänglich und eine Reparatur ist aufwändig und kostspielig. Eine interne Reifendruck-Regelanlage sollte daher einen einfachen, störungssicheren Aufbau haben, damit Reparaturarbeiten an ihr während der Lebensdauer der Achse nicht erforderlich werden. Besondere Schwierigkeiten bei der Erreichung dieses Ziels bereiten Drehdurchführungen, die für den Übertritt der Druckluft von nicht rotierenden Teilen der Fahrzeugkarosserie zum rotierenden Rad benötigt werden und im Gebrauch Reibverschleiß unterliegen.

Aus DE 199 50 191 C1 ist eine Reifendruck-Regelanlage für eine Kraftfahrzeug mit einer karosserieseitigen Ventilbaugruppe und einer radseitigen, mit dem Rad rotierenden Ventilbaugruppe bekannt, die miteinander über drei Druckleitungen, eine Steuerleitung, eine Arbeitsleitung und eine Signalleitung, in Verbindung stehen. Die Arbeitsleitung dient der Zufuhr von Druckluft zum Reifen, die Signalleitung überträgt ein Druckmittel zum Steuern der radseitigen Ventilbaugruppe, und durch Beaufschlagen der Steuerleitung mit Druckluft werden Dichtringe aus Nuten eines karosserieseitigen Flansches ausgefahren und gegen einen radseitigen Flansch angedrückt, um Übergangskammern der Arbeitsleitung und der Signalleitung während des Belüftens des Reifens zeitweilig abzudichten. Die große Zahl der Leitungen und Dichtungen macht die Anlage sehr aufwendig und störungsanfällig.

Ferner wird auf die aus DE 10 2007 054887 A1, EP 0 308 256 A2 und US 2008/023918 A1 bekannten Dichtsysteme hingewiesen.

Eine Aufgabe der vorliegenden Erfindung ist, eine Reifendruck-Regelanlage mit verbesserter Zuverlässigkeit bei geringem konstruktivem Aufwand zu schaffen.

Die Aufgabe wird gelöst, indem bei einer Reifendruck-Regelanlage für ein Fahrzeug mit einer karosserieseitigen Ventilbaugruppe und einer radseitigen Ventilbaugruppe, die über wenigstens eine Übergangskammer miteinander in Verbindung stehen, die durch relativ zueinander drehbare erste und zweite Flansche und wenigstens eine in einer Nut des ersten Flansches angeordnete und gegen den zweiten Flansch beaufschlagbare Dichtung begrenzt ist, ein von der Nut und der von dem zweiten Flansch abgewandten Rückseite der Dichtung begrenzter Hohlraum mit der Übergangskammer kommuniziert.

Die Kommunikation zwischen dem Hohlraum und der Übergangskammer wird meist über einen offenen Durchgang zustande kommen; für die Zwecke der Erfindung kommt aber jegliche einen Druckausgleich zwischen beiden ermöglichende Verbindung in Betracht; so könnte z.B. zwischen dem Hohlraum und der Übergangskammer eine bewegliche Membran einen Druckausgleich ermöglichen, ohne gleichzeitig eine Vermischung der Druckmedien von Hohlraum und Übergangskammer zu erlauben.

Indem der Übergangskammer Druckluft zugeführt wird, wird somit auch der Hohlraum an der Rückseite der Dichtung unter Überdruck gesetzt, was die Dichtung gegen den zweiten Flansch treibt. Sobald die Dichtung den zweiten Flansch berührt und die Druckluft somit nicht mehr frei aus der Übergangskammer abfließen kann, steigt der Druck in der Übergangskammer weiter an, und die Dichtung wird fest gegen den zweiten Flansch gedrückt.

Bei Druckabfall in der Übergangskammer fällt der Druck im Hohlraum hinter der Dichtung ebenfalls ab. Die Dichtung ist somit kräftefrei und kann sich durch die Rotation und die abströmende Restluftmenge geringfügig von der Dichtfläche des zweiten Flansches abheben, womit die Dichtung verschleißmäßig total entlastet wird. Somit entsteht ein bei Druckbeaufschlagung selbsttätig wirkendes, abdichtendes System. Im drucklosen Zustand, d.h. immer dann, wenn der Reifendruck nicht geändert wird, ist die Dichtung reibungs- und verschleißfrei.

Um in jeder Orientierung des Rades einen Übergang von Druckluft von der karosserieseitigen zur radseitigen Ventilbaugruppe zu ermöglichen, sollte sich die Übergangskammer in an sich bekannter Weise ringförmig um die Achse des Rades erstrecken. Dementsprechend erstrecken sich zweckmäßigerweise auch die Nut und die Dichtung ringförmig um die Radachse, wobei die Dichtung die Übergangskammer radial nach außen oder auch nach innen abdichten kann. Um die Dichtwirkung zu optimieren, ist die Dichtung vorzugsweise radial dehn- und/oder stauchbar, so dass die Dichtung dem in der Übergangskammer herrschenden Druck in radialer Richtung nachgeben und sich eng an eine von der Übergangskammer abgewandte Seitenwand der Nut anschmiegen kann.

Um den Verschleiß der Dichtung zu minimieren, sollte bei Beendigung der Druckluftzufuhr zur Übergangskammer der Hohlraum schnell druckentlastet werden, so dass die Dichtung von dem zweiten Flansch abrücken kann. Zu diesem Zweck ist an der Dichtung vorteilhafterweise eine Leckstelle vorgesehen. Ein zusätzlicher Aufwand in Form eines Entlastungsventils, wie in EP 1 051 302 B1 vorgeschlagen, wird daher nicht benötigt.

Der Querschnitt der Leckstelle kann zweckmäßigerweise derart bemessen sein, dass der drucklose Zustand in der Übergangskammer wenige Sekunden, z. B. 3 bis 5s, nach Beendigung der Druckluftzufuhr erreicht ist. Im Vergleich zu dem großen Luftmengenstrom, der zur Befüllung von großvolumigen Reifen landwirtschaftlicher Fahrzeuge bereitzustellen ist, ist der durch diese Leckstelle verlorene Luftmengenstrom vernachlässigbar klein.

Um die oben erwähnte radiale Dehn- oder Stauchbarkeit der Dichtung zu erreichen, ist die Leckstelle vorzugsweise durch einen Schlitz gebildet. Dies ermöglicht die Verwendung eines relativ steifen, gegen den im Dichtbetrieb auftretenden Reibverschleiß beständigen Werkstoffs für die Dichtung.

Der Schlitz verleiht dem Dichtring einen zusätzlichen Freiheitsgrad. Bei Druckbeaufschlagung kann ein geschlitzter Dichtring sowohl eigene als auch Maßabweichungen der Aufnahmenut ausgleichen und in optimaler Weise sich an die druckabgewandte Seitenwand der Nut anschmiegen. So werden reproduzierbare Verhältnisse des Dichtverhaltens sichergestellt.

Die durch den Schlitz entstandene Undichtigkeitsstelle kann konstruktiv sehr klein gehalten werden und verursacht nur einen äußerst geringen Effizienzverlust für die Gesamtanlage.

Um die mit dem Schlitz verbundene Leckrate der Dichtung besonders gering zu halten, erstreckt sich der Schlitz in einer Ausbildungsform zwischen zwei in Umfangsrichtung überlappenden Zungen der Dichtung. Diese schieben sich beim Dehnen oder Stauchen der Dichtung mehr oder weniger weit übereinander, wobei der in der Übergangskammer herrschende Überdruck die Zungen gegeneinander presst, was die Leckrate reduziert.

Zweckmäßigerweise können die Nut bzw. die Rückseite der Dichtung so geformt sein, dass in einer von dem zweiten Flansch beabstandeten Anschlagstellung der Dichtung, in der diese die Übergangskammer nicht abdichtet, ein von der Übergangskammer abgewandter Bereich der Rückseite der Dichtung an einem Boden der Nut anliegt. Auf diese Weise wird der oben erwähnte Hohlraum an der Rückseite der Dichtung in einem der Übergangskammer zugewandten Bereich ständig offen gehalten, so dass der Übergangskammer zugeführte Druckluft sich schnell in dem Hohlraum verteilen und die Dichtung gegen den zweiten Flansch treiben kann.

Um ein zuverlässiges Schließen der Dichtungen zusätzlich sicherzustellen, ist es wichtig, dass aus der Übergangskammer entwichene Druckluft jenseits der Dichtung frei abfließen kann. Dies kann problematisch sein, wenn die zwei Flansche einen Zwischenraum begrenzen, der von der Dichtung in die Übergangskammer und eine Nebenkammer unterteilt wird, die radial innerhalb oder außerhalb der Übergangskammer liegen kann. Insbesondere bei einer äußeren Übergangskammer kann eine umlaufende Schürze an einem der Flansche befestigt sein und am Flansch anliegen, um das Eindringen von Schmutz und Feuchtigkeit zwischen die Flansche zu verhindern. Eine solche Schürze behindert in entgegengesetzter Richtung auch das Entweichen von Luft. Um dennoch einen ungestörten Luftabfluss sicherzustellen, ist zweckmäßigerweise wenigstens einer der Flansche mit wenigstens einer Bohrung versehen, über die die Nebenkammer mit der Umgebung kommuniziert.

Eine weitere erhebliche Vereinfachung der Reifendruck-Regelanlage wird möglich, wenn ein und derselbe Leitungsstrang verwendet wird, um dem Reifen Druckluft zuzuführen und die radseitige Ventilbaugruppe zu steuern. Ein solcher Ansatz ist an sich aus EP 1 051 302 B1 bekannt. Diese bekannte Ventilbaugruppe umfasst ein druckgesteuertes Wegeventil mit einem Einlassanschluss, einem Auslassanschluss und einem reifenseitigen Anschluss, der mit zunehmendem am Einlassanschluss anliegenden Druck von einem Sperrzustand zunächst in einen Befüllzustand, in dem der reifenseitige Anschluss mit dem Einlassanschluss verbunden ist, und dann in einen Ablasszustand umschaltet, in dem der reifenseitige Anschluss mit dem Auslassanschluss verbunden ist. Der Reifendruck kann bei dieser Ventilbaugruppe niemals höher sein als der Grenzdruck, bei dem das Wegeventil vom Befüllzustand in den Ablasszustand umschaltet. Anders betrachtet muss eine karosserieseitige Baugruppe in der Lage sein, einen höheren Druck als den maximal benötigten Reifendruck bereit zu stellen, um die Ventilbaugruppe in den Ablasszustand versetzen zu können. Dies erfordert eine leistungsfähige und dementsprechend kostspielige Druckgasquelle auf Seiten der Karosserie. Da der eingestellte Reifendruck stets niedriger ist als der Druck, den die Druckgasquelle zu liefern imstande ist, arbeitet sie mit einem schlechten Wirkungsgrad.

Ein weiterer Nachteil der aus EP 1 051 302 B1 bekannten Reifendruck-Regelanlage ist die längere Befüllzeit der Reifen beim mittleren Luftdruck, da bei Verwendung einer Drehdurchführung vom aus DE 199 50 191 C1 bekannten Typ der Verschleiß der Dichtung proportional zur Befüllzeit ist.

Um diese Mängel zu beheben, ist einem zweiten Aspekt der Erfindung zufolge eine radseitige Ventilbaugruppe für eine Reifendruck-Regelanlage mit einem Einlassanschluss, einem Auslassanschluss und einem reifenseitigen Anschluss, die zwischen einem ersten Schaltzustand, in dem der reifenseitig Anschluss gesperrt ist, einem zweiten Schaltzustand, in dem der reifenseitige Anschluss mit dem Auslassanschluss verbunden ist und einem dritten Schaltzustand, in dem der reifenseitige Anschluss mit dem Einlassanschluss verbunden ist, in Abhängigkeit vom am Einlassanschluss anliegenden Druck umschaltbar ist, eingerichtet, den ersten Schaltzustand unterhalb eines ersten Grenzdrucks am Einlassanschluss, den zweiten Schaltzustand zwischen dem erstenund einem zweiten Grenzdruck und den dritten Schaltzustand oberhalb des zweiten Grenzdrucks einzunehmen.

Der erste Schaltzustand wird zweckmäßigerweise insbesondere dann eingenommen, wenn der am Einlassanschluss anliegende Druck der Atmosphärendruck ist.

Um den Reifendruck schnell auf wechselnde Zustände des befahrenden Untergrunds einstellen zu können, ist die Befüllzeit ein wichtiges Gütekriterium moderner Reifendruck-Regelanlagen. Die Befüllung erfolgt um so schneller, je höher der anstehende Befülldruck ist. Nur dieser aktive Vorgang ist von der Leistungsfähigkeit der im Fahrzeug installierten Druckluftquelle zu beeinflussen. Die Dauer des passiven Luftablassens ist lediglich vom Reifendruck selbst abhängig. Die Leistungsfähigkeit der Druckquelle ist hier nebensächlich.

Der mit dieser Ventilbaugruppe erreichbare Reifendruck ist nicht durch einen der Grenzdrücke begrenzt, sondern nur durch den Druck, den eine an den Einlassanschluss angeschlossene Druckquelle zu liefern imstande ist. Zwar durchläuft diese Ventilbaugruppe nach jedem Befüllen kurzzeitig den Auslasszustand, bevor sie den Sperrzustand erreicht, doch kann ein daraus resultierender Druckverlust des Reifens durch eine hinreichend schnelle Druckabsenkung am Einlassanschluss auf ein unkritisches Maß reduziert werden.

Wegeventile in Schieberbauweise, wie sie für die Radventilanordnung in der Schrift EP 1 051 302 B1 vorgesehen sind, sind im Allgemeinen nicht hundertprozentig dicht, so dass über eine radseitige Ventilbaugruppe, die nur aus einem Wegeventil in Schieberbauweise besteht, der Reifen kontinuierlich Druck verliert und regelmäßig neu befüllt werden muss, um einen konstanten Solldruck aufrecht zu erhalten.

Um dies zu vermeiden, umfasst die erfindungsgemäße Ventilgruppe vorzugsweise ein pneumatisch gesteuertes Wegeventil mit einem mit dem Einlassanschluss verbundenen Eingang, einen mit dem Einlassanschluss verbundenen Steueranschluss und einen mit dem Reifenanschluss verbundenen ersten Ausgang sowie ein Sitzventil, das zwischen dem Reifenanschluss und dem Auslassanschluss angeordnet ist und einen mit einem zweiten Ausgang des Wegeventils verbundenen Steueranschluss aufweist und bei Überschreiten des ersten Grenzdrucks öffnet.

Anstelle des druckgesteuerten Wegeventils kann auch ein funkgesteuertes Wegeventil zwischen dem reifenseitigen Anschluss und dem Steuereingang angeordnet sein.

Ein Drucksensor ist vorteilhafterweise unmittelbar an dem Reifen angeschlossen, so dass zum Erfassen des Drucks des Reifens kein Ventil geöffnet werden muss. Das Messsignal eines solchen Drucksensors kann zweckmäßigerweise per Funk an die karosserieseitige Baugruppe und/oder eine Anzeigeeinheit des Fahrzeugs übertragen werden.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein Pneumatikschaltplan einer erfindungsgemäßen Reifendruck-Regelanlage;
- Fig. 2: einen schematischen Schnitt durch zwei gegeneinander drehbare Flansche eines Rades bzw. einer Radaufhängung eines Fahrzeugs, bei dem die Reifendruck-Regelanlage der Fig. 1 eingebaut ist;
- Fig. 3: ein vergrößertes Detail aus Fig. 2;
- Fig. 4: eine Draufsicht auf eine Dichtung der Reifendruck-Regelanlage;
- Fig. 5: eine Draufsicht auf eine Dichtung gemäß einer abgewandelten Ausgestaltung; und
- Fig. 6: ein Pneumatikschaltplan einer weiteren Ausgestaltung der Reifendruck-Regelanlage.

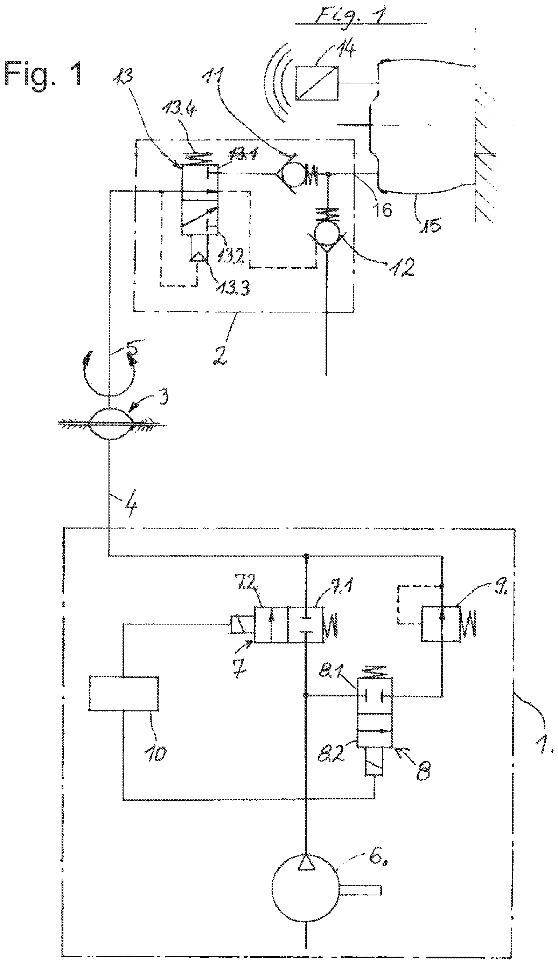

Fig. 1 zeigt schematisch eine Reifendruck-Regelanlage für ein landwirtschaftliches Fahrzeug. Die Anlage umfasst eine karosserieseitige Ventilbaugruppe 1 und mehrere identische radseitige Ventilbaugruppen 2, von denen in der Figur nur eine dargestellt ist. Ein Leitungsstrang mit einer karosserieseitigen Druckluftleitung 4, einer radseitigen Druckluftleitung 5 und einer Drehdurchführung 3 verbindet die Ventilbaugruppen 1, 2.

Die karosserieseitige Ventilbaugruppe 1 umfasst eine Druckluftquelle 6 mit einem an sich bekannten, hier nicht beschriebenen Kompressor und gegebenenfalls einem Druckluftspeicher, zwei elektromagnetisch betätigte 2/2 Wegeventile 7, 8, ein Druckregelventil 9 sowie ein elektronisches Steuergerät 10.

Die radseitige Ventilbaugruppe 2 umfasst zwei Sitzventile, als Befüllventil 11 bzw. Ablassventil 12 bezeichnet, die mit einem zu einem Reifen 15 führenden Anschluss 16 der Ventilbaugruppe 2 verbunden sind. Schließkörper der beiden Sitzventile 11, 12 sind durch den im Reifen 15 herrschenden Druck gegen ihren Sitz gepresst, so dass die beiden Ventile 11, 12 in ihren Schließstellungen hermetisch dicht sind. Das Ablassventil 12 ist über einen Steuereingang pneumatisch aufsteuerbar. Ein pneumatisch betätigtes 3/2-Wegeventil 13 hat einen mit der Druckluftleitung 5 verbundenen Einlassanschluss, einen ebenfalls mit der Druckluftleitung 5 verbundenen Steuereingang, einen mit dem Befüllventil 11 verbundenen ersten Ausgang und einen mit dem Steuereingang des Ablassventils 12 verbundenen zweiten Ausgang.

Ein Druck- und Temperatursensor 14 ist unmittelbar, jedoch im Abstand vom Anschluss 16, mit dem Reifen 15 verbunden. Zum Übertragen gemessener Druck- und Temperaturwerte an das Steuergerät 10 ist der Sensor 14 mit einer Funkschnittstelle, zum Beispiel einem RFID-Transponder, ausgestattet.

Wenn sich die Ventile 7, 8 der karosserieseitigen Ventilbaugruppe 1 in ihren mit 7.1 bzw. 8.1 bezeichneten Schließstellungen befinden, sind die Druckluftleitungen 4, 5 und die Drehdurchführung 3 drucklos. Zum Befüllen des Reifens 15 wird das Ventil 7 von dem Steuergerät 10 in seine offene Stellung 7.2 geschaltet. Dadurch gelangt der Ausgangsdruck der Druckluftquelle 6 über die Leitungen 4, 5 an das Wegeventil 13 und versetzt dieses in eine mit 13.2 bezeichnete Schaltstellung, in der sein Eingangsanschluss mit dem ersten Ausgangsanschluss verbunden ist. Der Ausgangsdruck der Druckluftquelle 6 liegt somit am Befüllventil 11 an, und Druckluft fließt über das Befüllventil 11 in den Reifen 15.

Ist der gewünschte Reifendruck erreicht, wird das Ventil 7 wieder in seine Schließstellung 7.1 versetzt, der Überdruck auf den Leitungen 4, 5 bricht zusammen, das Wegeventil 13 kehrt in seine Schließstellung 13.1 zurück, und das Befüllventil 11 sperrt.

Soll der Reifendruck gesenkt werden, so wird das Ventil 8 durch das Steuergerät 10 in die offene Stellung 8.2 gebracht. Das Druckregelventil 9 regelt den Druck in den Leitungen 4, 5 auf einen Wert, der niedriger ist, als zum Schalten des Wegeventils 13 in die Stellung 13.2 erforderlich, der aber höher ist als ein zum Aufschalten des Ablassventils 12 an dessen Steuereingang anzulegender Grenzdruck. Das Wegeventil 13 verharrt somit in der Stellung 13.1, und der auf den Leitungen 4, 5 liegende Druck gelangt an den Steuereingang des Ablassventils 12 und öffnet dieses, so dass Luft aus dem Reifen 15 ins Freie abfließen kann. Wenn ein gewünschter Reifendruck erreicht ist, wird das Wegeventil 8 in die Sperrstellung 8.1 zurückgeschaltet, und der Druck auf den Leitungen 4, 5 fällt ab, so dass das Ablassventil 12 wieder sperrt.

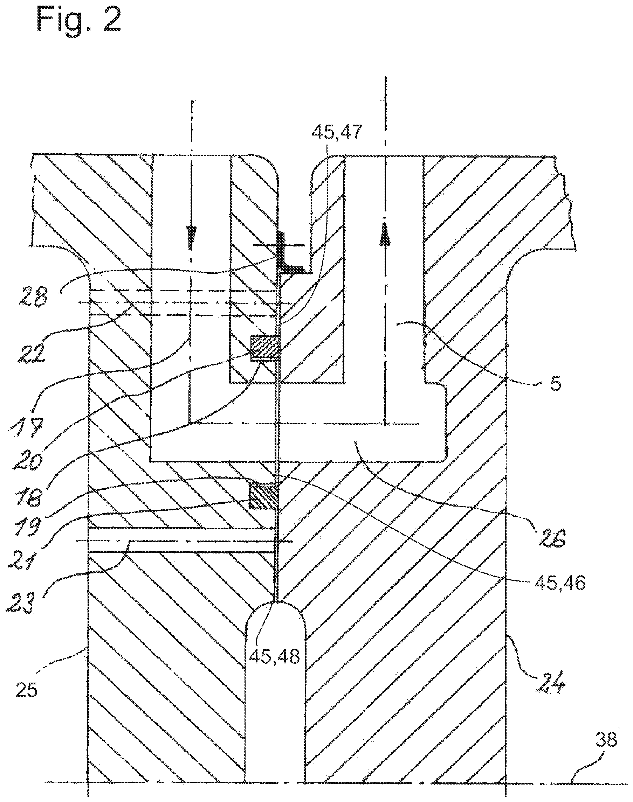

Fig. 2 verdeutlicht den Aufbau der Drehdurchführung 3. Gezeigt ist ein Schnitt durch zwei sich gegenüberliegende Flansche 24, 25, von denen der eine, 25, mit der Karosserie des Fahrzeugs verbunden und nicht drehbar ist, während der andere, 24, einen Teil des Rades bildet und um eine Radachse 38 drehbar ist. Einander gegenüber liegende Oberflächen der beiden Flansche 24, 25 sind durch einen schmalen Zwischenraum 45 getrennt. Die Oberfläche des Flansches 25 weist zwei zur Radachse 38 konzentrische Ringnuten 18, 19 auf. Eine Bohrung 17, die einen Teil der Druckluftleitung 4 bildet, mündet zwischen den zwei Ringnuten 18, 19 auf die Oberfläche des Flansches 25. Der Mündung der Bohrung 17 liegt ein ebenfalls zur Achse 38 konzentrischer Ringkanal 26 des Flansches 24 gegenüber, von dem die zu einer der radseitigen Ventilbaugruppen 2 führende Druckluftleitung 5 ausgeht. Zwei ringförmige Dichtungen 20, 21 sind spielhaltig in den Ringnuten 18, 19, aufgenommen, jedoch konstruktiv annähernd an die druckabgewandten Wandungen dieser Ringnuten eingepasst.

Wenn die Leitung 4 mit Druckluft beaufschlagt wird, gelangt diese über den Zwischenraum 45 auch an dem Ringkanal 26 zugewandte Seitenflanken der Dichtungen 18, 19 sowie zwischen den Boden der Nuten 18, 19 und eine vom Flansch 24 abgewandte Rückseite der im Querschnitt im Wesentlichen rechteckigen Dichtungen 20, 21. Unter dem Einfluss dieses Drucks wird die Dichtung 20 radial nach außen und gegen den Flansch 24 und die Dichtung 21 radial nach innen und gegen den Flansch 24 gedrückt, so dass sie den Ringkanal und eine zwischen den Dichtungen 20, 21 liegende Zone 46 des Zwischenraums 45 gegen die jeweils jenseits der Dichtungen 20, 21 liegenden Zonen 47, 48 abdichten.

Damit die Dichtwirkung schnell einsetzt, sollte die Druckdifferenz zwischen der Zone 46 und den Zonen 47, 48 groß sein. Um zu diesem Zweck die Zonen 47, 48 zuverlässig auf Atmosphärendruck zu halten, trotz der Anwesenheit einer Dichtlippe 28 am äußeren Rand des Zwischenraums 45, die das Eindringen von Schmutz und Feuchtigkeit in den Zwischenraum verhindert, sind im Flansch 25 Belüftungsbohrungen 22, 23 vorgesehen, die Zonen 47, 48 mit der Umgebung verbinden.

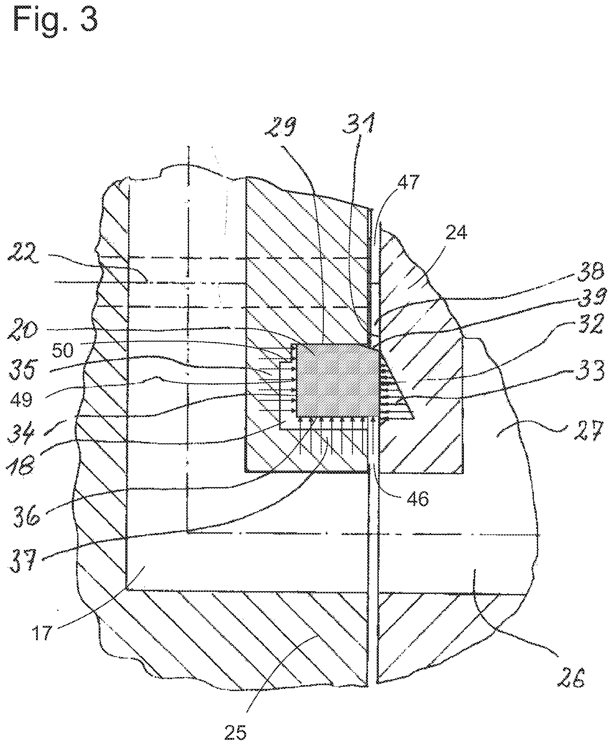

Fig. 3 verdeutlicht die Wirkungsweise der Dichtungen, hier der Dichtung 20, anhand eines vergrößerten Schnitts. Die Drücke, denen die Dichtung 20 ausgesetzt ist, wenn die Leitungen 4, 5 mit Druckluft beaufschlagt sind, sind als Gruppen von Pfeilen 33, 35, 37 dargestellt. Die Druckverteilung 37 an der Innenseite 36 der Dichtung 20 treibt diese radial nach außen, gegen eine Außenwand 29 der Ringnut 18, so dass sich die Dichtung 20 eng an diese Außenwand 29 anschmiegt. Über den dadurch zwischen der Innenseite 36 der Dichtung 20 und der Innenwand der Nut 18 erhaltenen Spalt gelangt Druckluft in einen Hohlraum 49 zwischen den Boden der Nut 18 und der Rückseite 34 der Dichtung 20. Die infolge dessen auf die Rückseite 34 der Dichtung 20 einwirkende Druckverteilung 35 treibt die Dichtung 20 gegen den Flansch 24. Zwischen der Vorderseite 32 der in der Nut 18 im Wesentlichen ruhenden Dichtung 20 und der Oberfläche 31 des rotierenden Flansches 24 nimmt der hydrostatische Druck, infolge des in der Zone 47 herrschenden Atmosphärendrucks in etwa dreiecksförmig von innen nach außen ab, wie durch die Verteilung 33 dargestellt. Diese kompensiert das auf die Rückseite 34 einwirkende Druckfeld 35 nicht, so dass die Dichtung 20 durch eine Überschusskraft fest an die Oberfläche 31 des Flansches 24 angepresst wird.

Eine Stufe 50 am Boden der Nut 18 sorgt dafür, dass der Hohlraum 49 niemals ganz geschlossen ist, auch wenn die Dichtung 20 sich in einer Anschlagstellung am Boden der Nut 18 befinden sollte. So kann sich die Druckluft schnell hinter der Dichtung 20 aufbauen und diese gegen den Flansch 24 treiben.

Eine Fase 39 an einer der überdrucklosen Zone 47 zugewandten Kante der Dichtung 20 verhindert, dass diese unter dem Einfluss des anliegenden Überdrucks plastisch deformiert wird und in die Zone 47 vordringt. So ist sichergestellt, dass, wenn der Überdruck aus den Leitungen 4, 5 abgelassen wird, die Dichtung 20, sich nicht an der Kante der Außenwand 29 verhakt, sondern sich ohne Schwierigkeiten vom von der Oberfläche 31 löst. So ist die Dichtung 20 vor unnötigem Reibverschleiß geschützt.

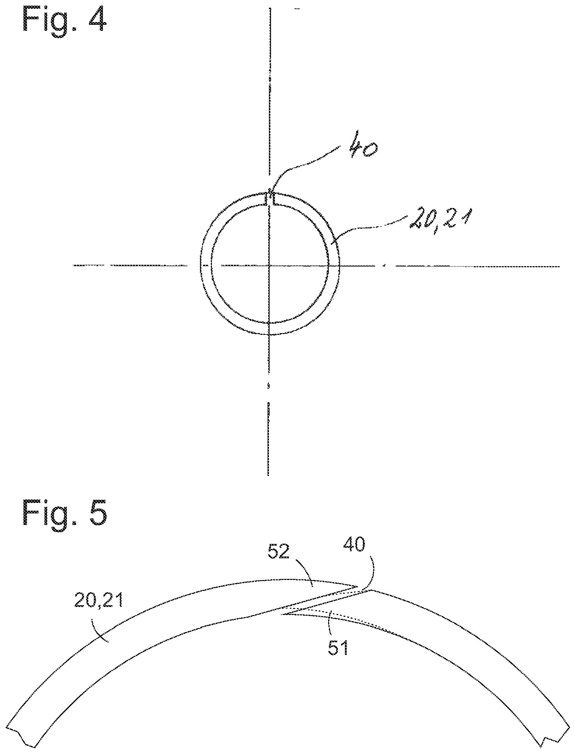

Um die oben beschriebene radiale Stauchung oder Aufweitung der einstückigen Dichtungen 20, 21 zu ermöglichen, können die Dichtungen aus einem streckbaren, zum Beispiel gummielastischen Material bestehen. Derartige Materialien sind jedoch im Allgemeinen relativ empfindlich gegen Reibverschleiß und Temperatureinflüsse . Unempfindliche und gegen Reibverschleiß beständigere Materialien sind meist nur in sehr geringem Umfang streckbar. Um dennoch derartige Materialien für die Dichtungen 20, 21 verwenden zu können, weisen einer bevorzugten Ausgestaltung zufolge die Dichtungen wie in Fig. 4 gezeigt einen Schlitz 40 auf. Dieser Schlitz ermöglicht eine radiale Dehnung der Dichtungen durch einfaches Aufbiegen, ohne dass dafür das Material der Dichtungen in Umfangsrichtung gestreckt werden müsste. Auch eine radiale Stauchung ist zumindest soweit möglich, bis sich der Spalt 40 schließt. Ein mit dem Vorhandensein des Spalts 40 verbundenes kontinuierliches Entweichen von Druckluft kann hingenommen werden, da diese Leckrate, gemessen an dem zur Befüllung von landwirtschaftlichen Fahrzeugreifen erforderlichen Luftvolumenstrom, vernachlässigbar klein ist.

Fig. 5 zeigt ein Stück einer geschlitzten Dichtung 20, 21 gemäß einer alternativen Ausgestaltung. Dieser Ausgestaltung zufolge ist der Schlitz 40 nicht radial sondern schräg orientiert, so dass beiderseits des Schlitzes in Umfangsrichtung überlappende, zu ihren Enden jeweils spitz zulaufende Zungen 51, 52 erhalten werden. Diese Zungen sind unter dem Einfluss einer Druckdifferenz verformbar, wie in Fig. 5 für die innere Zunge 51 gezeigt. Indem sie sich unter dem Einfluss eines innen anliegenden Überdrucks gegen die äußere Zunge 52 schmiegt, verschließt die innere Zunge 51 den Schlitz 40 und minimiert so die Leckrate.

In einer besonders vorteilhaften Ausgestaltung des Schlitzes 40 der Dichtungen 20, 21 nach Fig. 4 oder 5 wird der Öffnungsquerschnitt des Schlitzes konstruktiv derart gestaltet, dass der Druckabbau im Leitungstrang 4, 5 und in der Drehdurchführung 3, nach dem Schließen der karosserieseitigen Ventile 7, 8 binnen eines kurzen, berechenbaren Zeitraums von ca. 3 bis 5 Sekunden völlig erfolgt ist.

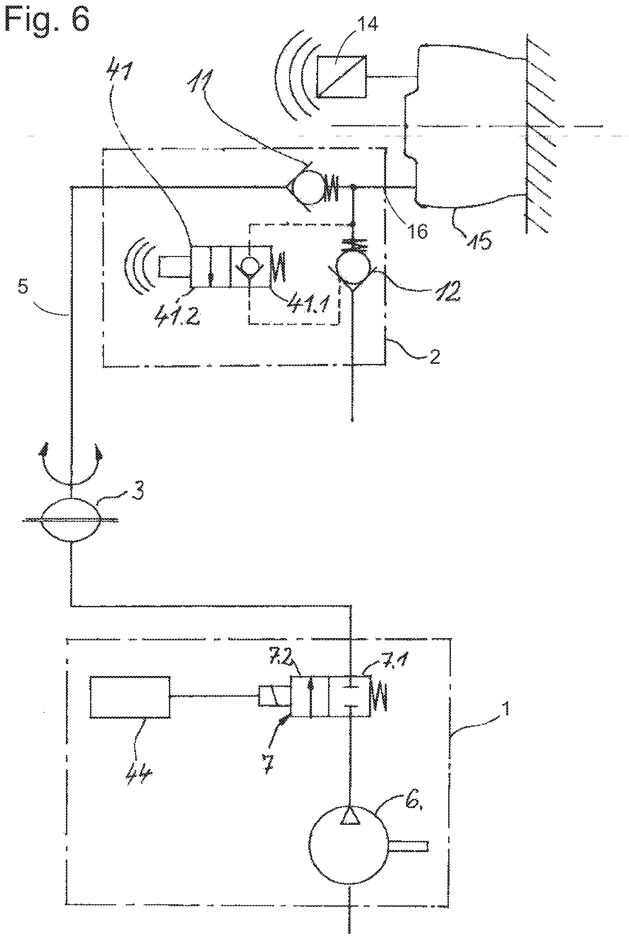

Fig. 6 zeigt in einer zur Fig. 1 analogen schematischen Darstellung eine Reifendruck-Regelanlage gemäß einer weiteren Ausgestaltung der Erfindung. Die Druckluftleitungen 4, 5 und die Drehdurchführung 3 sind mit denjenigen der Fig. 1 identisch und werden nicht erneut beschrieben. Das druckgesteuerte Wegeventil 13 der Ausgestaltung von Fig. 1 ist hier durch ein funkgesteuertes 2/2-Wege-Vorsteuerventil 41 ersetzt. Im Ruhezustand 41.1 ist das Vorsteuerventil 41 durch ein absolut dicht schließendes Sitzventil gesperrt. Im offenen Zustand 41.2 beaufschlagt es den Steuereingang des Ablassventils 12 mit dem im Reifen 15 herrschenden Druck und öffnet dadurch das Ablassventil 12. Das Befüllventil 11 ist unmittelbar zwischen die Druckluftleitung 5 und den Reifen 15 geschaltet, um Druckluft von der Quelle 6 durchzulassen wenn diese anliegt.

Da die vereinfachte radseitige Ventilbaugruppe 2 nach dieser Ausgestaltung nicht mehr über den angelegten Druck gesteuert werden muss, vereinfacht sich auch der Aufbau der karosserieseitigen Ventilbaugruppe 1. Das Wegeventil 8 und das Druckregelventil 9 der Ausgestaltung von Fig. 1 entfallen; erhalten bleiben lediglich die Druckluftquelle 6, das Wegeventil 7 und ein Steuergerät 44, das, da es lediglich das Ventil 7 steuern muss, ebenfalls einfacher ist als das Steuergerät 10 der Fig. 1.

### Bezugszeichen

- 1: Ventilbaugruppe
- 2: Ventilbaugruppe
- 3: Drehdurchführung
- 4: Druckluftleitung
- 5: Druckluftleitung
- 6: Druckluftquelle
- 7: Wegeventil
- 8: Wegeventil
- 9: Druckregelventil
- 10: Steuergerät
- 11: Befüllventil
- 12: Ablassventil
- 13: 3/2-Wegeventil
- 14: Sensor
- 15: Reifen
- 16: reifenseitiger Anschluss
- 17: Bohrung
- 18: Ringnut
- 19: Ringnut
- 20: Dichtung
- 21: Dichtung
- 22: Belüftungsbohrung
- 23: Belüftungsbohrung
- 24: Flansch
- 25: Flansch
- 26: Ringkanal
- 27: Bohrung
- 28: Dichtlippe
- 29: Außenwand
- 30 31: Oberfläche
- 32: Vorderseite
- 33: Druckverteilung
- 34: Rückseite
- 35: Druckverteilung
- 36: Innenseite
- 37: Druckverteilung
- 38: Radachse
- 39: Fase
- 40: Schlitz
- 41: Vorsteuerventil
- 44: Steuergerät
- 45: Zwischenraum
- 46: Zone
- 47: Zone
- 48: Zone
- 49: Hohlraum
- 50: Stufe
- 51: Zunge
- 52: Zunge

## Patentansprüche

1. Reifendruck-Regelanlage für ein Fahrzeug mit einer karosserieseitigen Ventilbaugruppe (1) und wenigstens einer radseitigen Ventilbaugruppe(2), die über wenigstens eine Übergangskammer (26, 46) miteinander in Verbindung stehen, die durch relativ zueinander drehbare erste und zweite Flansche (24, 25) und wenigstens eine in einer Nut (18, 19) des ersten Flansches (25) angebrachte und gegen den zweiten Flansch (24) beaufschlagbare Dichtung (20, 21) begrenzt ist, **dadurch gekennzeichnet, dass** ein von der Nut (18, 19) und der von dem zweiten Flansch (24) abgewandten Rückseite (34) der Dichtung (20, 21) begrenzter Hohlraum (49) mit der Übergangskammer (26, 46) kommuniziert.

2. Reifendruck-Regelanlage nach Anspruch 1, **dadurch gekennzeichnet, dass** die Nut (18, 19) und die Dichtung (20, 21) sich ringförmig um eine Radachse erstrecken und die Dichtung radial dehn- und/oder stauchbar ist.

3. Reifendruck-Regelanlage nach Anspruch 2, **dadurch gekennzeichnet, dass** die Dichtung (20, 21) wenigstens eine Leckstelle, insbesondere einen Schlitz (40) aufweist.

4. Reifendruck-Regelanlage nach Anspruch 3, **dadurch gekennzeichnet, dass** sich eine als Schlitz (40) ausgeführte Leckstelle zwischen zwei in Umfangsrichtung überlappenden Zungen (51, 52) der Dichtung (20, 21) erstreckt.

5. Reifendruck-Regelanlage nach einem der vorhergehenden Ansprüche, **dadurch gekennzeichnet, dass** in einer von dem zweiten Flansch (24) beabstandeten Anschlagstellung der Dichtung (20, 21) ein von der Übergangskammer (26, 46) abgewandter Bereich der Rückseite (34) der Dichtung an einem Boden der Nut (18, 19) anliegt.

6. Reifendruck-Regelanlage nach einem der vorhergehenden Ansprüche, **dadurch gekennzeichnet, dass** die Dichtung (20, 21) einen Zwischenraum (45) zwischen den zwei Flanschen (24, 25) in die Übergangskammer (26, 46) und eine Nebenkammer (47, 48) unterteilt, die über wenigstens eine Bohrung (22, 23) in wenigstens einem der Flansche (25) mit der Umgebung kommuniziert.

7. Reifendruck-Regelanlage nach einem der vorhergehenden Ansprüche, **dadurch gekennzeichnet, dass** die Dichtung (20, 21) einen im wesentlichen rechteckigen Querschnitt mit einer Fase (39) an einer von der Übergangskammer (26, 46) abgewandten Seite hat.

8. Reifendruck-Regelanlage nach einem der vorhergehenden Ansprüche, **dadurch gekennzeichnet, dass** diese eine radseitige Ventilbaugruppe (2) mit einem Einlassanschluss (5), einem Auslassanschluss und einem reifenseitigen Anschluss (16) umfasst, die zwischen einem ersten Schaltzustand, in dem der reifenseitige Anschluss (16) gesperrt ist, einem zweiten Schaltzustand, in dem der reifenseitige Anschluss (16) mit dem Auslassanschluss verbunden ist und einem dritten Schaltzustand, in dem der reifenseitige Anschluss (16) mit dem Einlassanschluss (5) verbunden ist, in Abhängigkeit vom am Einlassanschluss (5) anliegenden Druck umschaltbar ist, wobei die radseitige Ventilbaugruppe (2) eingerichtet ist, den ersten Schaltzustand unterhalb eines ersten Grenzdrucks am Einlassanschluss (5), den zweiten Schaltzustand zwischen dem ersten und einem zweiten Grenzdruck und den dritten Schaltzustand oberhalb des zweiten Grenzdrucks einzunehmen.

9. Reifendruck-Regelanlage nach Anspruch 8, **dadurch gekennzeichnet, dass** ein pneumatisch gesteuertes Wegeventil (13) einen mit dem Einlassanschluss (5) verbundenen Eingang, einen mit dem Einlassanschluss (5) verbundenen Steueranschluss (13.3) und einen mit dem reifenseitigen Anschluss (16) verbundenen ersten Ausgang aufweist und dass ein zweiter Ausgang des Wegeventils (13) mit einem Steuereingang eines zwischen dem reifenseitigen Anschluss (16) und dem Auslassanschluss angeordneten zweiten Sitzventils (12) verbunden ist, welches bei Überschreiten des ersten Grenzdrucks am Steuereingang öffnet.

10. Reifendruck-Regelanlage nach Anspruch 8 oder 9, **dadurch gekennzeichnet, dass** ein erstes Sitzventil (11) zwischen dem Einlassanschluss (5) und dem reifenseitigen Anschluss (16) angeordnet ist.

11. Reifendruck-Regelanlage nach einem der Ansprüche 1 bis 7, **dadurch gekennzeichnet, dass** die radseitige Ventilbaugruppe (2) einen Einlassanschluss (5), einen Auslassanschluss und einen reifenseitigen Anschluss (16) umfasst, wobei ein erstes Sitzventil (11) zwischen dem Einlassanschluss (5) und dem reifenseitigen Anschluss und ein zweites Sitzventil zwischen dem Auslassanschluss und dem reifenseitigen Anschluss (16) angeordnet ist.

12. Reifendruck-Regelanlage nach Anspruch 11, **dadurch gekennzeichnet, dass** das zweite Sitzventil (12) durch Druckbeaufschlagen eines Steuereingangs aufschaltbar ist.

13. Reifendruck-Regelanlage nach Anspruch 12, **gekennzeichnet durch** ein druckgesteuertes Wegeventil (13), das zwischen dem Einlassanschluss (5) und dem Steuereingang angeordnet ist.

14. Reifendruck-Regelanlage nach Anspruch 12, **gekennzeichnet durch** ein funkgesteuertes Wegeventil (41), das zwischen dem reifenseitigen Anschluss (16) und dem Steuereingang angeordnet ist.

15. Reifendruck-Regelanlage nach einem der Ansprüche 8 bis 14, **dadurch gekennzeichnet, dass** ein Drucksensor (14) unmittelbar an den Reifen (15) angeschlossen ist.

## Claims

1. A tyre pressure regulating device for a vehicle having a body-side valve assembly (1) and at least one wheel-side valve assembly (2) which are in communication with each other by way of at least one transition chamber (26, 46) defined by first and second flanges (24, 25) rotatable relative to each other and at least one seal (20, 21) which is disposed in a groove (18, 19) in the first flange (25) and which can be urged against the second flange (24), **characterised in that** a cavity (49) defined by the groove (18, 19) and the rear side (34) of the seal (20, 21), that faces away from the second flange (24), communicates with the transition chamber (26, 46).

2. A tyre pressure regulating device according to claim 1 **characterised in that** the groove (18, 19) and the seal (20, 21) extend annularly around a wheel axis and the seal can be radially stretched and/or compressed.

3. A tyre pressure regulating device according to claim 2 **characterised in that** the seal (20, 21) has at least one leak location, in particular a slit (40).

4. A tyre pressure regulating device according to claim 3 **characterised in that** a leak location in the form of the slit (40) extends between two tongues (51, 52) of the seal (20, 21), that overlap in the peripheral direction.

5. A tyre pressure regulating device according to one of the preceding claims **characterised in that** in an abutment position of the seal (20, 21) of being spaced from the second flange (24) a region of the rear side (34) of the seal, that faces away from the transition chamber (26, 46), bears against a bottom of the groove (18, 19).

6. A tyre pressure regulating device according to one of the preceding claims **characterised in that** the seal (20, 21) subdivides an intermediate space (45) between the two flanges (24, 25) into the transition chamber (26, 46) and a secondary chamber (47, 48) which communicates with the environment by way of at least one bore (22, 23) in at least one of the flanges (25).

7. A tyre pressure regulating device according to one of the preceding claims **characterised in that** the seal (20, 21) is of a substantially rectangular cross-section with a bevel (39) at a side facing away from the transition chamber (26, 46).

8. A tyre pressure regulating device according to one of the preceding claims **characterised in that** it includes a wheel-side valve assembly (2) having an inlet connection (5), an outlet connection and a tyre-side connection (16) which can be switched over in dependence on the pressure at the inlet connection (5) between a first switching state in which the tyre-side connection (16) is closed, a second switching state in which the tyre-side connection (16) is connected to the outlet connection and a third switching state in which the tyre-side connection (16) is connected to the inlet connection (5), wherein the wheel-side valve assembly (2) is adapted to assume the first switching state below a first limit pressure at the inlet connection (5), the second switching state between the first and the second limit pressure and the third switching state above the second limit pressure.

9. A tyre pressure regulating device according to claim 8 **characterised in that** a pneumatically controlled directional control valve (13) has an input connected to the inlet connection (5), a control connection (13.3) connected to the inlet connection (5), and a first output connected to the tyre-side connection (16) and that a second output of the directional control valve (18) is connected to a control input of a second seat valve (12) which is arranged between the tyre-side connection (16) and the outlet connection and which opens when the first limit pressure at the control input is exceeded.

10. A tyre pressure regulating device according to claim 8 or claim 9 **characterised in that** a first seat valve (11) is arranged between the inlet connection (5) and the tyre-side connection (16).

11. A tyre pressure regulating device according to one of claims 1 to 7 **characterised in that** the wheel-side valve assembly (2) includes an inlet connection (5), an outlet connection and a tyre-side connection (16), wherein a first seat valve (11) is arranged between the inlet connection (5) and the tyre-side connection and a second seat valve is arranged between the outlet connection and the tyre-side connection (16).

12. A tyre pressure regulating device according to claim 11 **characterised in that** the second seat valve (12) can be opened by pressurisation of a control input.

13. A tyre pressure regulating device according to claim 12 **characterised by** a pressure-controlled directional control valve (13) arranged between the inlet connection (5) and the control input.

14. A tyre pressure regulating device according to claim 12 **characterised by** a radio-controlled directional control valve (41) arranged between the tyre-side connection (16) and the control input.

15. A tyre pressure regulating device according to one of claims 8 to 14 **characterised in that** a pressure sensor (14) is connected directly to the tyre (15).

## Revendications

1. Dispositif de réglage de pression de pneumatiques pour un véhicule, comprenant un ensemble de valves côté carrosserie (1) et au moins un ensemble de valves côté roue (2), lesquels sont en liaison entre eux par l'intermédiaire d'au moins une chambre de transfert (26, 46) qui est limitée par des première et seconde flasques (24, 25) tournantes l'une par rapport à l'autre et par au moins un joint (20, 21) disposé dans une gorge (18, 19) de la première flasque (25) et applicable contre la seconde flasque (24), **caractérisé en ce qu'**une cavité (49) limitée par la gorge (18, 19) et par le côté arrière (34) du joint (20, 21) orienté à l'opposé de la seconde flasque (24) communique avec la chambre de transfert (26, 46).

2. Dispositif de réglage de pression de pneumatiques selon la revendication 1, **caractérisé en ce que** la gorge (18, 19) et le joint (20, 21) s'étendent de façon annulaire autour d'un essieu de roue, et le joint peut s'élargir et/ou s'aplatir radialement.

3. Dispositif de réglage de pression de pneumatiques selon la revendication 2, **caractérisé en ce que** le joint (20, 21) comporte au moins un emplacement de fuite, en particulier une fente (40).

4. Dispositif de réglage de pression de pneumatiques selon la revendication 3, **caractérisé en ce qu'**un emplacement de fuite conformé en fente (40) s'étend entre deux languettes (51, 52) du joint (20, 21) qui se chevauchent dans la direction circonférentielle.

5. Dispositif de réglage de pression de pneumatiques selon une des revendications précédentes, **caractérisé en ce que**, dans une position de butée du joint (20, 21) distante de la seconde flasque (24), une zone du côté arrière (34) du joint orientée à l'opposé de la chambre de transfert (26, 46) est appliquée contre un fond de la gorge (18, 19).

6. Dispositif de réglage de pression de pneumatiques selon une des revendications précédentes, **caractérisé en ce que** le joint (20, 21) divise un interstice (45) entre les deux flasques (24, 25) en la chambre de transfert (26, 46) et en une chambre auxiliaire (47, 48) qui, par l'intermédiaire d'au moins un perçage (22, 23) pratiqué dans au moins une des flasques (25), communique avec l'environnement.

7. Dispositif de réglage de pression de pneumatiques selon une des revendications précédentes, **caractérisé en ce que** le joint (20, 21) possède une section sensiblement rectangulaire avec un chanfrein (39) sur le côté orienté à l'opposé de la chambre de transfert (26, 46).

8. Dispositif de réglage de pression de pneumatiques selon une des revendications précédentes, **caractérisé en ce qu'**il comprend un ensemble de valves côté roue (2) avec un raccord d'entrée (5), un raccord de sortie et un raccord côté pneumatique (16), lequel ensemble est commutable, en fonction de la pression appliquée au raccord d'entrée (5), entre un premier état de commutation, dans lequel le raccord côté pneumatique (16) est fermé, un deuxième état de commutation, dans lequel le raccord côté pneumatique (16) est relié au raccord de sortie, et un troisième état de commutation, dans lequel le raccord côté pneumatique (16) est relié au raccord d'entrée (5), l'ensemble de valves côté roue (2) étant agencé pour adopter le premier état de commutation au-dessous d'une première pression limite au raccord d'entrée (5), le deuxième état de commutation entre la première et une seconde pression limite, et le troisième état de commutation au-dessus de la seconde pression limite.

9. Dispositif de réglage de pression de pneumatiques selon la revendication 8, **caractérisé en ce qu'**une valve directionnelle à commande pneumatique (13) comporte une entrée reliée au raccord d'entrée (5), un raccord de commande (13.3) relié au raccord d'entrée (5) et une première sortie reliée au raccord côté pneumatique (16), et **en ce qu'**une seconde sortie de la valve directionnelle (13) est reliée à une entrée de commande d'une seconde valve à siège (12) qui est disposée entre le raccord côté pneumatique (16) et le raccord de sortie et qui s'ouvre en cas de dépassement de la première pression limite à l'entrée de commande.

10. Dispositif de réglage de pression de pneumatiques selon la revendication 8 ou 9, **caractérisé en ce qu'**une première valve à siège (11) est disposée entre le raccord d'entrée (5) et le raccord côté pneumatique (16).

11. Dispositif de réglage de pression de pneumatiques selon une des revendications 1 à 7, **caractérisé en ce que** l'ensemble de valves côté roue (2) comprend un raccord d'entrée (5), un raccord de sortie et un raccord côté pneumatique (16), une première valve à siège (11) étant disposée entre le raccord d'entrée (5) et le raccord côté pneumatique, et une seconde valve à siège étant disposée entre le raccord de sortie et le raccord côté pneumatique (16).

12. Dispositif de réglage de pression de pneumatiques selon la revendication 11, **caractérisé en ce que** la seconde valve à siège (12) est ouvrable par une mise en pression d'une entrée de commande.

13. Dispositif de réglage de pression de pneumatiques selon la revendication 12, **caractérisé par** une valve directionnelle commandée par pression (13) qui est disposée entre le raccord d'entrée (5) et l'entrée de commande.

14. Dispositif de réglage de pression de pneumatiques selon la revendication 12, **caractérisé par** une valve directionnelle radiocommandée (41) qui est disposée entre le raccord côté pneumatique (16) et l'entrée de commande.

15. Dispositif de réglage de pression de pneumatiques selon une des revendications 8 à 14, **caractérisé en ce qu'**un capteur de pression (14) est relié directement au pneumatique (15).
